# EUROPEAN PATENT SPECIFICATION

(11) **EP 2 986 432 B1**
(45) Date of publication and mention of the grant of the patent: **06.06.2018**
(21) Application number: 14724250.7
(22) Date of filing: 02.04.2014
(51) Int. Cl.: B29C 45/17, B29C 45/28, B29C 45/27, B29C 45/77, B29C 45/76

(54) **CONTROLLED VALVE PIN MOVEMENT BASED ON CAVITY SENSOR FEEDBACK**
GESTEUERTE VENTILSTIFTBEWEGUNG AUF BASIS EINER HOHLRAUMSENSORRÜCKKOPPLUNG
MOUVEMENT DE GOUPILLE DE SOUPAPE COMMANDÉ, BASÉ SUR UNE RÉTROACTION DE CAPTEUR DE CAVITÉ

(30) Priority: 19.04.2013 US 201361814045 P; 28.05.2013 US 201361827897 P; 29.05.2013 US 201361828454 P; 24.06.2013 US 201361838620 P; 28.10.2013 US 201361896313 P
(43) Date of publication of application: 24.02.2016
(73) Proprietor: Synventive Molding Solutions, Inc., Peabody, MA 01960 (US)
(72) Inventor: GALATI, Vito, Rowley, MA 01969 (US); DEVELLIAN, Gregory, Leon, Topsfield, MA 01983 (US); GLOR, Robert, William, East Aurora, NY (US)
(74) Representative: Fuchs Patentanwälte Partnerschaft mbB
(86) International application number: PCT/US2014/032658
(87) International publication number: WO 2014/172100

(56) References cited:
- US-A1- 2002 086 086
- US-A1- 2004 166 189
- US-A1- 2011 212 204

## Description

### Background of the Invention

Injection molding systems that control pin position during the course of an injection cycle have been developed where the position of the pin is dynamically controlled in real time to follow a predetermined profile of pin positions based on a comparison of the pin position with a profile of pin positions. In systems where multiple nozzles are used to simultaneously inject fluid material to either multiple separate cavities or into a single cavity, prior systems rely on a single predetermined set of pin position data to control the rate of flow of injection fluid material into each separate cavity or otherwise through each separate gate leading to a single cavity. Such systems are disclosed in US 2011/0212204 A1, US 2004/0166189 A1 and US2002/0086086 A1.

### SUMMARY OF THE INVENTION

The present invention provides a system and method for controlling the simultaneous flow through each individual one of multiple nozzles into separate cavities or the same cavity where the rate of flow through each individual nozzle is made uniform by adjusting the flow through each of the nozzles to match as closely as possible the rate of flow or profile of pin position that occurred in a prior or test injection cycle via a selected nozzle and gate the injection part produced therefrom being selected as a standard for the rate of flow through one or more of the other multiple nozzles in subsequent injection cycles.

In accordance with the invention therefore there is provided a method of performing an injection molding cycle in an injection molding apparatus comprised of:
a manifold that receives an injection fluid material, the manifold having or communicating with a delivery channel that delivers the injection fluid mold material under an injection pressure to two or more gates each leading to an associated mold cavity,
an actuator associated with each respective gate,
each actuator being drivably interconnected to a valve pin drivable upstream and downstream along a path of travel having a selected stroke length that extends between a gate closed position, a selected maximum flow position at which the injection fluid material flows at a maximum rate through the gate into the cavity, the valve pin being drivable through one or more selectable intermediate positions between the first position and the maximum flow position,
each actuator being controllably drivable to position the interconnected valve pin at the first, one or more selectable intermediate and maximum flow positions over the course of an injection cycle,
a downstream sensor that senses a selected physical condition of the injection fluid material at a position within a mold cavity that is downstream of an associated gate, the downstream sensor generating a signal corresponding to the sensed values,
the method comprising the steps of:
   selecting and recording as a standard for a selected one of the gates, the amount of time elapsed between movement of the valve pin associated with the selected one of the gates out of the gate closed position and the time at which the downstream sensor first senses the selected condition of the injection fluid material flowing into the associated mold cavity,
   performing a subsequent injection cycle and for each of the other gates and sensing the selected physical condition of the injection fluid material at the downstream position with the downstream sensor associated with each of the other gates, and,
   recording the amount of time elapsed between movement of the valve pin associated with each of the other gates out of the gate closed position and the time at which the downstream sensor first senses the selected condition of the injection fluid material flowing into the associated cavities of each of the other gates,
   comparing the recorded amounts of time elapsed associated with each of the other gates with the standard amount of time elapsed that is associated with the selected one of the gates,
   adjusting position or velocity of the actuators or valve pins associated with each of the other gates during further subsequent injection cycles such that the amount of time elapsed between movement of the valve pins associated with each of the other gates of their gate closed position and the time at which the downstream sensor first senses the selected condition of the injection fluid material approaches or matches the selected standard amount of elapsed time.

In such a method the steps of performing and adjusting can be carried out automatically by an algorithm executed by a controller interconnected to and controllably driving or adjusting the drive of the actuators.

In such a method, the step of selecting and recording can comprise recording and establishing a standard profile of position of the actuator or valve pin versus time for the selected one of the gates and the step of adjusting can comprise recording and adjusting the position or drive rate of the actuators or valve pins associated with the other gates to approach or match the standard profile of position versus time.

In another aspect of the invention there is provided an apparatus for performing an injection molding cycle in an injection molding apparatus, the apparatus comprising:
a manifold that receives an injection fluid material, the manifold having or communicating with a delivery channel that delivers the injection fluid mold material under an injection pressure to two or more gates each leading to an associated mold cavity,
an actuator associated with each respective gate,
each actuator being drivably interconnected to a valve pin drivable upstream and downstream along a path of travel having a selected stroke length that extends between a gate closed position, a selected maximum flow position at which the injection fluid material flows at a maximum rate through the gate into the cavity, the valve pin being drivable through one or more selectable intermediate positions between the first position and the maximum flow position,
each actuator being controllably drivable to position an interconnected valve pin at the first, one or more selectable intermediate and maximum flow positions over the course of an injection cycle,
each gate having a downstream sensor that senses a selected condition of the injection fluid material at a position within each associated mold cavity that is downstream of each associated gate, the downstream sensor generating a response signal upon sensing the selected condition of the injection fluid material when the injection fluid material has flowed to the downstream position of the downstream sensor,
a controller containing predetermined data representing as a standard for a selected one of the gates, the amount of time elapsed between movement of the valve pin associated with the selected one of the gates out of the gate closed position and the time at which the downstream sensor associated with the selected one of the gates first senses the selected condition of the injection fluid material flowing into the associated mold cavity,
the downstream sensors of each of the gates other than the selected one of the gates sensing the selected condition of the injection fluid material and sending response signals to the controller on performance of each successive injection cycle by the apparatus,
the controller receiving the response signals from each downstream sensor associated with the other gates on performance of each successive injection cycle performed by the apparatus,
the controller including instructions that compares the amount of standard elapsed time with the calculated amount of elapsed time associated with each of the other gates,
the controller including instructions that adjust the velocity or position of each of the actuators associated with each of the other gates to drive the valve pins associated with each of the other gates at one or more velocities or to one or more positions during one or more successive injection cycles based on the compared amounts of time such that the amount of time elapsed between movement of the valve pins out of the gate closed position and the time that the downstream sensors associated with the other gates first sense the selected condition approaches or matches the standard amount of elapsed time.

Such an apparatus may include position sensors that sense position of the actuator or valve pin associated with each of the gates, the controller including data representing a standard profile of position of the actuator or valve pin versus time during an injection cycle for the selected one of the gates, the controller including instructions that compares position versus time of the actuators or valve pins for each of the gates during one or more successive injection cycles with the standard profile and directs the position or velocity of the actuators or valve pins associated with the other gates during the course of the one or more successive injection cycles such that the position versus time of the actuators or valve pins associated with the other gates approaches or matches the standard profile.

In all of the foregoing aspects and embodiments, the cavities associated with each of the individual two or more gates may comprise separate individual cavities. Or alternatively the individual two or more gates may enter into a single cavity.

For purposes of explanation, as an example, where two (2) sensors are used in the cavity, the downstream sensor (namely downstream of the gate) can be a temperature sensor having a user defined sensing trigger of 250F, with the upstream sensor (located near the entrance of the gate into the cavity) comprising a pressure sensor having a user defined sensing trigger of 5000psi. Taking for example an embodiment where there are sixteen (16) gates with associated nozzles and each gate and nozzle feeding a separate mold cavity, the user can select and pre-define the part that is produced in a selected one of the sixteen (16) mold cavities as the preferred standard part based on trial and error observation or testing and next input data into a controller that represents the preferred standard amount of time elapsed between the triggering of the upstream and downstream sensors that are associated with the cavity that produced the preferred selected part thus establishing a standard amount of elapsed time that all of the other fifteen (15) gates should ideally approach or match on all subsequent injection cycles. The controller can then looks at the time that elapsed between triggering of the upstream and downstream sensors for each of the sixteen (16) gates during the previous and automatically adjust the speed of the actuators or valve pins to be faster or slower for the next shot in an effort to approach or match the standard elapsed time. On each additional subsequent cycles, the controller will look at the elapsed times for each gate again, and make adjustments to the speed or positioning of the actuators and valve pins for all gates in each subsequent injection cycle until the elapsed times between sensing by the upstream and downstream sensors for all gates approach or are equal to the standard elapsed time.

Taking another example where only a single downstream sensor is used in the cavity, the downstream sensor can be, for example, a temperature sensor having a user defined sensing trigger of 250F. Assuming there are sixteen (16) gates and associated nozzles with each gate and nozzle injecting into a separate mold cavity, the user can defines the conditions used to inject into a selected one of the cavities as the standard and select and establish the time elapsed between opening of the gate and triggering of the downstream sensor as the standard elapsed time. The controller can then record the analogous elapsed time that occurred during the previous shot for all sixteen (16) gates and adjusts the actuator or valve pin speeds associated with each gate to be faster or slower for the next shot in an effort to approach or match the selected standard elapsed time. For all subsequent cycles, the controller can be programmed to continue to record the elapsed times for each previous cycle orshot, and make adjustments for each subsequent cycle until the analogous elapsed times between valve pin opening and downstream sensor triggering for all gates are equal to the standard elapsed time.

In either of the aforementioned examples, the user could alternatively simply select and specify a predetermined elapsed time without testing or analyzing parts produced by the cavities.

### Brief Description of the Drawings

The above and further advantages of the invention may be better understood by referring to the following description in conjunction with the accompanying drawings in which:

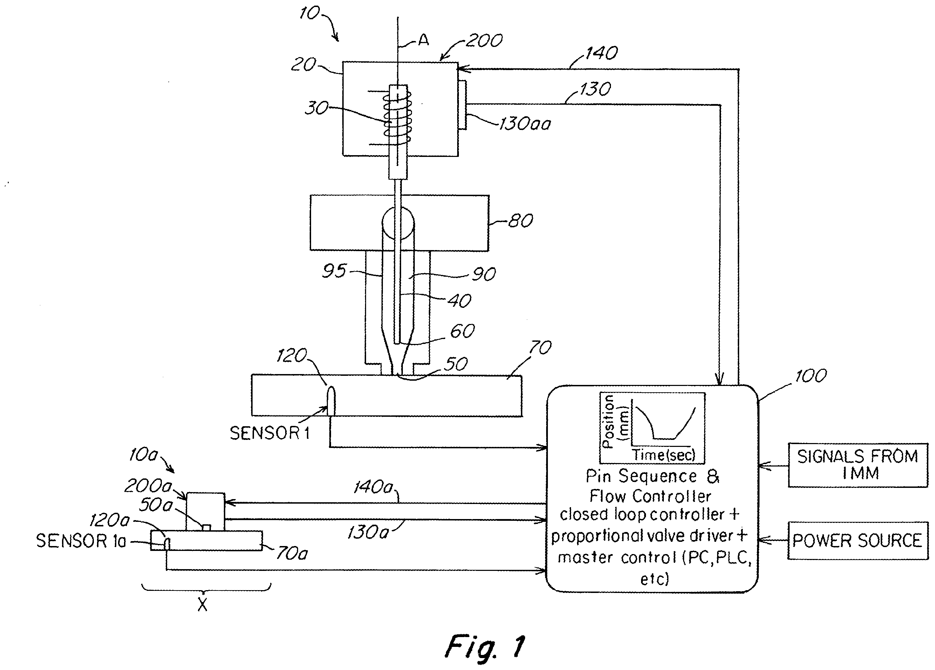

Fig. 1 is a schematic of an embodiment of the invention showing an electrically powered actuator interconnected to a valve pin that controls flow through a gate into a mold cavity having a single sensor disposed for detecting injection material downstream of the gate.

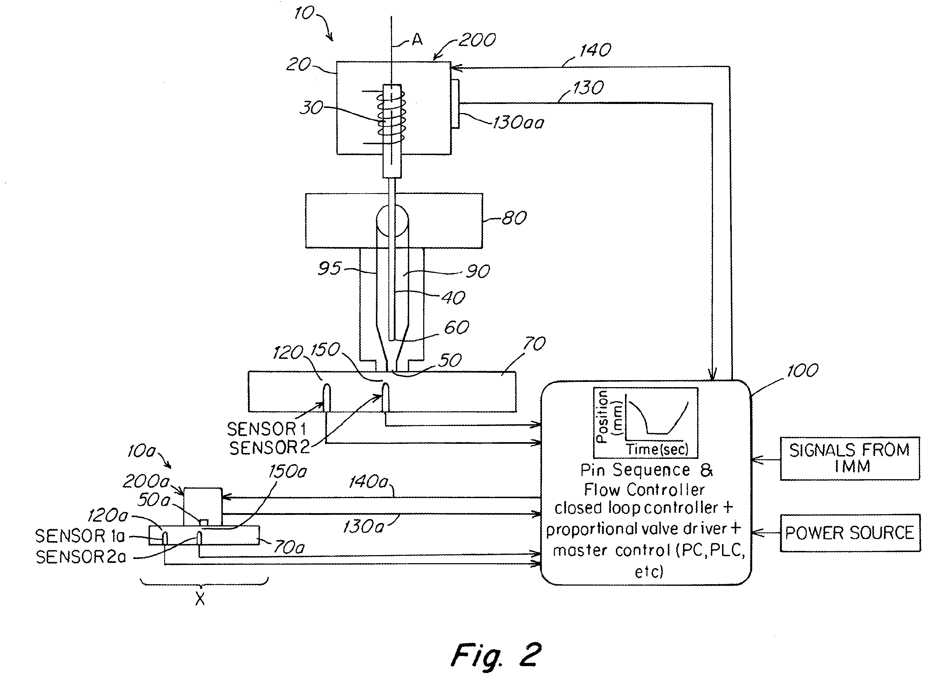

Fig. 2 is a schematic of an embodiment of the invention showing an electrically powered actuator interconnected to a valve pin that controls flow through a gate into a mold cavity having a first sensor disposed at the exit of the gate into a mold cavity and another sensor disposed downstream of the first sensor for detecting injection material downstream of the gate.

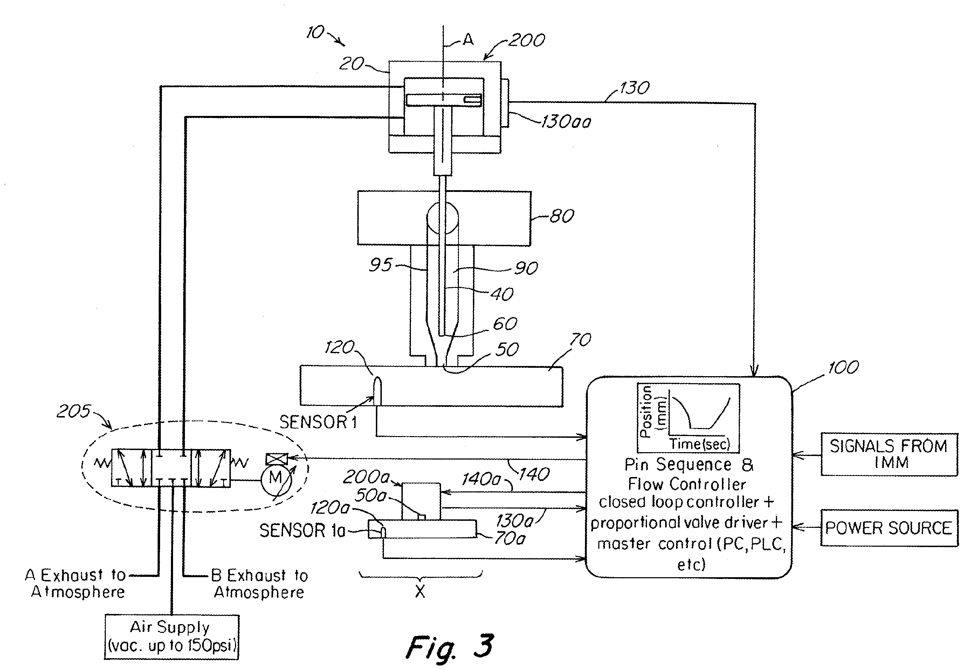

Fig. 3 is a schematic of an embodiment of the invention showing a pneumatically powered system injection molding system comprising a valve pin that controls flow through a gate into a mold cavity having a single sensor disposed for detecting injection material downstream of the gate, the valve pin having a distal tip end that is adapted to interact with the interior surface of the gate area of the apparatus to reduce injection fluid material flow to a reduced rate of flow that is less than the maximum rate of flow of the fluid material when the tip end is not in restriction proximity to the gate area, the valve pin being controllably driven by a remotely controllable, high precision flow control valve interconnected respectively between the flow ports of the upper and lower gas drive chambers of a pneumatic actuator and a master source of pressurized gas, typically air, that drives the system.

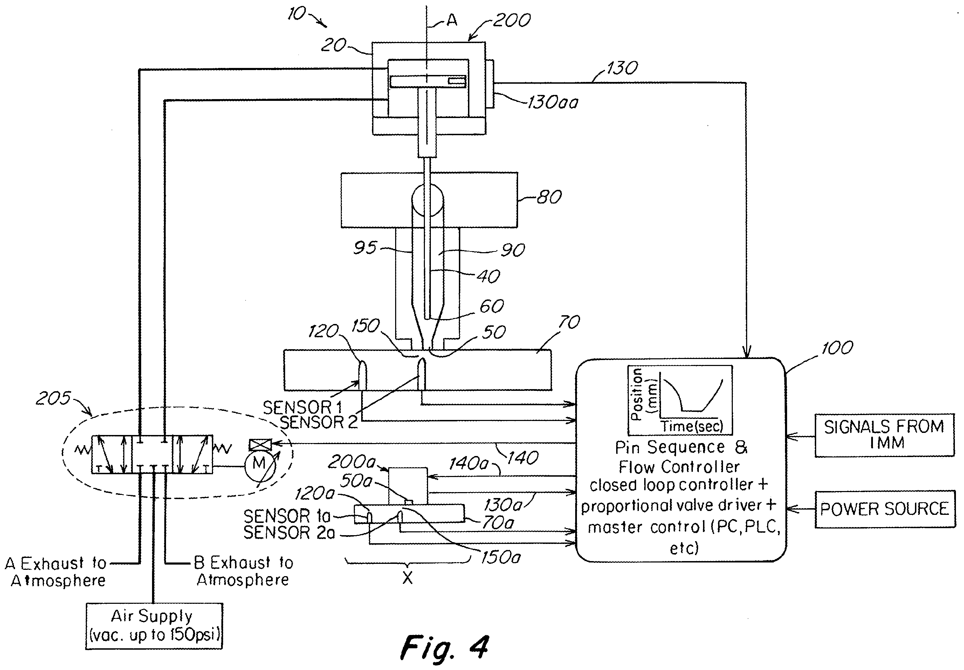

Fig. 4 is a schematic of an embodiment of the invention showing a pneumatically powered system injection molding system comprising a valve pin that controls flow through a gate into a mold cavity having a first sensor disposed at the exit of the gate into a mold cavity and another sensor disposed downstream of the first sensor for detecting injection material downstream of the gate, the valve pin having a distal tip end that is adapted to interact with the interior surface of the gate area of the apparatus to reduce injection fluid material flow to a reduced rate of flow that is less than the maximum rate of flow of the fluid material when the tip end is not in restriction proximity to the gate area, the valve pin being controllably driven by a remotely controllable, high precision flow control valve interconnected respectively between the flow ports of the upper and lower gas drive chambers of a pneumatic actuator and a master source of pressurized gas, typically air, that drives the system.

### Detailed Description

Fig. 1 shows a system 10 according to the invention comprised of multiple injection valve assemblies 200, 200a each of which comprise an electrically powered actuator 20 having an electric motor rotor 30 that is interconnected to a valve pin 40 that is controllably driven back and forth along an axis A at controlled velocities by controller 100 that contains a programmable processor and interconnected memory that can execute instructions using data input by the user. The valve pin 40 for each valve assembly has a distal tip end 60 that opens and closes a separate gate 50 for each valve assembly and, depending on the precise positioning of the tip end 60 relative to the interior surface of the nozzle that forms the gate 60, regulates the rate of flow of injection fluid material 90 injected from manifold 80 into nozzle passage 95 and ultimately through gate 50 into the mold cavity 70. Thus the controller 100 can, when appropriately programmed regulate the rate or velocity of flow of injection fluid material 90 into cavity 70 by regulating the velocity or positioning of valve pin 65 and its tip end 60 during the course of an injection cycle particularly the withdrawal or upstream velocity of the pin at the beginning of the injection cycle.

One or more additional injection valve assemblies 200a each separately associated with a different gate to the same or different mold cavities can be interconnected to and controlled by controller 100. In the embodiment shown in Figs. 1-4, each individual one of the assemblies 200, 200a inject into a separate mold cavity 70, 70a in which a separate part is formed. In the Fig. 1 embodiment, a single downstream sensor, Sensor 1, is shown positioned for detecting a selected condition of the injection fluid at a selected downstream position 120 within the cavity 70. Similarly, each of the other assemblies 200a have a downstream sensor 1a positioned for sensing a selected condition of injection fluid at a downstream position 120a within cavity 70a. The distance between the exit of gate 50 and downstream sensing position 120 is preselected and is the same or substantially the same as the distance between the downstream sensing position 120a and exit 50a of each of the other injection assemblies 200a. The assemblies 10, 10a can each include a position sensor 130aa that sends a signal 130, 130a indicative of the axial A position of rotor 30 and/or valve pin 65 and tip end 60 of each assembly 10, 10a to the processor or memory of controller 100. The controller 100 includes memory and a program with instructions that store and use as a standard, the predetermined amount of time that it takes injection fluid to flow from gate 50 to the time of detection by Sensor 1 at position 120. The standard time is predetermined either by conducting one or more test cycles at various trial and error withdrawal speeds for pin 65 or profiles of pin 65 position using assembly 10. After conducting such trials and determining the formation of a part formed within cavity 70 that is ideal, the withdrawal speed or position profile of pin 65 for the most preferred part forming trial is selected as a standard. The standard elapsed time or position profile is input to controller 100. Alternatively, the user can simply select a standard elapsed time or pin position profile

The controller 100 contains instructions that for one or more subsequent injection cycles of assemblies 200a, preferably all subsequent injection cycles, automatically records the time elapsed between the associated valve pins first opening gates 50a and the time that sensor 1a detects the injection fluid at position 120a of assemblies 200a. The controller then compares the automatically recorded elapsed times for assemblies 200a. If the compared recorded elapsed time for any assembly 200a differs from the established standard elapsed time, the controller 100 automatically adjusts the velocity or positioning of the valve pins associated with assemblies 200a to drive the actuators associated with such other assemblies to attempt to achieve a velocity or profile of position of movement of the actuators and valve pins of assemblies 200a that will cause the elapsed time for the assemblies 200a to approach or match the elapsed time for the standard.

As shown in Figs. 1-4, there are one or more, typically multiple additional X injection assemblies in any given system.

The preselected condition of the fluid that the Sensor 1 typically senses is pressure or temperature.

Fig. 2 shows a system 10 analogous to the system 10 of Fig. 1, the only difference being that the elapsed time on which the control system is based is the time elapsed between the time that an upstream sensor, Sensor 2 (or Sensor 2a) senses a preselected condition of the injection fluid at upstream point 150, 150a, and the time at which the downstream Sensor 1 senses the preselected condition of the injection fluid at point 120, 120a.

The preselected condition of the fluid that the Sensor 1 and Sensor 2 typically sense is pressure or temperature. Sensor 1 could sense one condition such as pressure and Sensor 2 could sense a different condition such as temperature or the same condition as Sensor 1.

Figs. 3 and 4 depict systems in which the actuation systems comprises a fluid driven, as opposed to an electricity driven, actuator 20. A preferred fluid driven valve system 205 comprises a fast acting linear force motor driven proportional valve 205 that regulates the flow of either gas or liquid to the actuator 20, namely either a pneumatic or hydraulic system.

The system 10 of Fig. 3 operates in the same manner as described with reference to Fig. 1, the difference being that the controller 100 controls the operation of the fluid control valve system 205 and the same or similar fluid control valve system that drives the injection system 200a.

The system of Fig. 4 operates in the same manner as described with reference to Fig. 2, the difference being that the controller controls the operation of the valve system 205 and the same or similar fluid control valve system that drives the injection system 200a.

A fast acting fluid control valve system as described in detail in PCT/US2014/31000 and in U.S. Patent No. 5960831, can be used in the apparatuses described herein particularly where pneumatic valve control systems are preferred for the particular application.

## Claims

1. A method of performing an injection molding cycle in an injection molding apparatus (10) comprised of:
a manifold (80) that receives an injection fluid material (90), the manifold (80) having or communicating with a delivery channel (95) that delivers the injection fluid mold material under an injection pressure to two or more gates (50, 50a) each leading to an associated mold cavity (70),
an actuator (20) associated with each respective gate (50, 50a),
each actuator (20) being drivably interconnected to a valve pin (40) drivable upstream and downstream along a path of travel having a selected stroke length that extends between a gate (50, 50a) closed position, a selected maximum flow position at which the injection fluid material flows at a maximum rate through the gate (50, 50a) into the cavity (70) and
**characterized in that**:
the valve pin (40) is drivable through
one or more selectable intermediate positions between the first position and the maximum flow position,
each actuator (20) being controllably drivable to position the interconnected valve pin (40) at the first, one or more selectable intermediate and maximum flow positions over the course of an injection cycle,
a downstream sensor (sensor 1, sensor 1a) that senses a selected physical condition of the injection fluid material (90) at a position (120, 120a) within a mold cavity (70) that is downstream of an associated gate (50, 50a), the downstream sensor (sensor 1, sensor 1a) generating a signal corresponding to the sensed values,
the method comprising the steps of:
selecting and recording as a standard for a selected one of the gates (50), the amount of time elapsed between movement of the valve pin (40) associated with the selected one of the gates (50, 50a) out of the gate (50, 50a) closed position and the time at which the downstream sensor (sensor 1) first senses the selected condition of the injection fluid material flowing into the associated mold cavity (70),
performing a subsequent injection cycle and for each of the other gates (50a) and sensing the selected physical condition of the injection fluid material (90) at the downstream position (120a) with the downstream sensor (sensor 1a) associated with each of the other gates (50a), and,
recording the amount of time elapsed between movement of the valve pin (40) associated with each of the other gates (50a) out of the gate (50, 50a) closed position and the time at which the downstream sensor (sensor 1a) first senses the selected condition of the injection fluid material (90) flowing into the associated cavities (70a) of each of the other gates (50a),
comparing the recorded amounts of time elapsed associated with each of the other gates (50a) with the standard amount of time elapsed that is associated with the selected one of the gates (50),
adjusting position or velocity of the actuators (20) or valve pins (40) associated with each of the other gates (50a) during further subsequent injection cycles such that the amount of time elapsed between movement of the valve pins (40) associated with each of the other gates (50a) of their gate (50, 50a) closed position and the time at which the downstream sensor (sensor 1a) first senses the selected condition of the injection fluid material approaches or matches the selected standard amount of elapsed time.

2. The method of claim 1 wherein the steps of performing and adjusting are carried out automatically by an algorithm executed by a controller (100) interconnected to and controllably driving or adjusting the drive of the actuators (20).

3. The method of claim 1 wherein the step of selecting and recording comprises recording and establishing a standard profile of position of the actuator (20) or valve pin (40) versus time for the selected one of the gates (50, 50a) and the step of adjusting comprises recording and adjusting the position or drive rate of the actuators (20) or valve pins (40) associated with the other gates (50a) to approach or match the standard profile of position versus time.

4. Apparatus (10) for performing an injection molding cycle in an injection molding apparatus, the apparatus comprising:
a manifold (70) that receives an injection fluid material (90), the manifold having or communicating with a delivery channel (95) that delivers the injection fluid mold material under an injection pressure to two or more gates (50, 50a) each leading to an associated mold cavity (70),
an actuator (20) associated with each respective gate (50, 50a),
each actuator (20) being drivably interconnected to a valve pin (40) drivable upstream and downstream along a path of travel having a selected stroke length that extends between a gate (50, 50a) closed position, a selected maximum flow position at which the injection fluid material (90) flows at a maximum rate through the gate (50, 50a) into the cavity (70, 70a) and
**characterized in that**:
the valve pin (40) is drivable through
one or more selectable intermediate positions between the first position and the maximum flow position,
each actuator (20) being controllably drivable to position the interconnected valve pin (40) at the first, one or more selectable intermediate and maximum flow positions over the course of an injection cycle,
each gate (50, 50a) having a downstream sensor (sensor 1, sensor 1a) that senses a selected condition of the injection fluid material (90) at a position within each associated mold cavity (70, 70a) that is downstream (120, 120a) of each associated gate (50, 50a), the downstream sensor (sensor 1, sensor 1a) generating a response signal upon sensing the selected condition of the injection fluid material when the injection fluid material has flowed to the downstream position (120, 120a) of the downstream sensor (sensor 1, sensor 1a),
a controller (100) containing predetermined data representing as a standard for a selected one of the gates (50), the amount of time elapsed between movement of the valve pin (40) associated with the selected one of the gates (50, 50a) out of the gate (50, 50a) closed position and the time at which the downstream sensor (120) associated with the selected one of the gates (50) first senses the selected condition of the injection fluid material flowing into the associated mold cavity (70),
the downstream sensors (sensor 1a) of each of the gates (50a) other than the selected one (50) of the gates (50, 50a) sensing the selected condition of the injection fluid material and sending response signals to the controller on performance of each successive injection cycle by the apparatus,
the controller (100) receiving the response signals from each downstream sensor(sensor 1a) associated with the other gates (50a) on performance of each successive injection cycle performed by the apparatus (10),
the controller (100) including instructions that compares the amount of standard elapsed time with the calculated amount of elapsed time associated with each of the other gates (50a),
the controller (100) including instructions that adjust the velocity or position of each of the actuators (20) associated with each of the other gates (50a) to drive the valve pins (40) associated with each of the other gates (50a) at one or more velocities or to one or more positions during one or more successive injection cycles based on the compared amounts of time such that the amount of time elapsed between movement of the valve pins (40) out of the gate (50, 50a) closed position and the time that the downstream sensors (120a) associated with the other gates (50a) first sense the selected condition approaches or matches the standard amount of elapsed time.

5. The apparatus of claim 4 further including position sensors (130aa) that sense position of the actuator (20) or valve pin (40) associated with each of the gates (50, 50a), the controller (100) including data representing a standard profile of position of the actuator (20) or valve pin (40) versus time during an injection cycle for the selected one of the gates (50, 50a), the controller (100) including instructions that compares position versus time of the actuators (20) or valve pins (40) for each of the gates (50, 50a) during one or more successive injection cycles with the standard profile and directs the position or velocity of the actuators (20) or valve pins (40) associated with the other gates (50a) during the course of the one or more successive injection cycles such that the position versus time of the actuators (20) or valve pins (40) associated with the other gates (50a) approaches or matches the standard profile.

## Patentansprüche

1. Verfahren zum Ausführen eines Spritzgießzyklus in einer Spritzgießvorrichtung (10), die aufweist:
einen Verteiler (80), der ein flüssiges Spritzgießmaterial (90) empfängt, wobei der Verteiler (80) einen Zufuhrkanal (95) aufweist oder damit kommuniziert, der das flüssige Spritzgießmaterial unter einem Einspritzdruck zwei oder mehr Angusskanälen (50, 50a) zuführt, die jeweils zu einem zugeordneten Formenhohlraum (70) führen;
einen jedem der Angusskanäle (50, 50a) jeweils zugeordneten Aktuator (20);
wobei jeder Aktuator (20) antriebsmäßig mit einem Ventilstift (40) verbunden ist, der stromaufwärts und stromabwärts entlang eines Verfahrweges antreibbar ist, der eine ausgewählte Verfahrlänge hat, die sich zwischen einer geschlossenen Position des Angusskanals (50, 50a) und einer ausgewählten Position für einen maximalen Durchfluss erstreckt, bei der das flüssige Spritzgießmaterial mit einer maximalen Durchflussrate durch den Angusskanal (50, 50a) in den Hohlraum (70) fließt;
**dadurch gekennzeichnet, dass**
der Ventilstift (40) durch eine oder mehrere auswählbare Zwischenpositionen zwischen der ersten Position und der Position für einen maximalen Durchfluss antreibbar ist,
jeder Aktuator (20) steuerbar antreibbar ist, um den verbundenen Ventilstift (40) im Verlauf eines Spritzgießzyklus an der ersten, an einer oder mehreren auswählbaren Zwischenpositionen oder an der Position für einen maximalen Durchfluss anzuordnen;
ein stromabwärtsseitiger Sensor (Sensor 1, Sensor 1a) einen ausgewählten physikalischen Zustand des flüssigen Spritzgießmaterials (90) an einer Position (120, 120a) innerhalb eines Formenhohlraum (70) erfasst, der stromabwärts von einem zugeordneten Anguss (50, 50a) angeordnet ist, wobei der stromabwärtsseitige Sensor (Sensor 1, Sensor 1a) ein den erfassten Werten entsprechendes Signal erzeugt,
wobei das Verfahren die folgenden Schritte aufweist:
Auswählen und Aufzeichnen der Zeitdauer, die zwischen der Bewegung des dem ausgewählten der Angusskanäle (50, 50a) zugeordneten Ventilstifts (40) aus der geschlossenen Position des Angusskanals (50 50a) und der Zeit verstrichen ist, zu der der stromabwärtsseitige Sensor (Sensor 1) den ausgewählten Zustand des in den zugeordneten Formenhohlraum (70) fließenden flüssigen Spritzgießmaterials erfasst, als eine Standardzeitdauer für einen ausgewählten der Angusskanäle (50);
Ausführen eines nachfolgenden Spritzgießzyklus für jeden der anderen Angusskanäle (50a) und Erfassen des ausgewählten physikalischen Zustands des flüssigen Spritzgießmaterials (90) an der stromabwärtsseitigen Position (120a) durch den stromabwärtsseitigen Sensor (Sensor 1a), der jedem der anderen Angusskanäle (50a) zugeordnet ist, und
Aufzeichnen der Zeitdauer, die zwischen der Bewegung des jedem der anderen Angusskanäle (50a) zugeordneten Ventilstifts (40) aus der geschlossenen Position des Angusskanals (50, 50a) und der Zeit verstrichen ist, zu der der stromabwärtsseitige Sensor (Sensor 1a) zuerst den ausgewählten Zustand des in die zugeordneten Hohlräume (70a) jedes der anderen Angusskanäle (50a) fließenden flüssigen Spritzgießmaterials (90) erfasst;
Vergleichen der aufgezeichneten verstrichenen Zeitdauern, die jedem der anderen Angusskanäle (50a) zugeordnet sind, mit der dem ausgewählten der Angusskanäle (50) zugeordneten Standardzeitdauer; und
Einstellen der Position oder der Geschwindigkeit der Aktuatoren (20) oder der Ventilstifte (40), die jedem der anderen Angusskanäle (50a) zugeordnet sind, während weiterer nachfolgender Spritzgießzyklen derart, dass die Zeitdauer, die zwischen der Bewegung der jedem der anderen Angusskanäle (50a) zugeordneten Ventilstifte (40) aus der geschlossenen Positionen der Angusskanäle (50, 50a) und der Zeit verstrichen ist, zu der der stromabwärtsseitige Sensor (Sensor 1a) zuerst den ausgewählten Zustand des flüssigen Spritzgießmaterials erfasst, sich der ausgewählten Standardzeitdauer annähert oder mit ihr übereinstimmt.

2. Verfahren nach Anspruch 1, wobei die Schritte zum Ausführen und Einstellen automatisch durch einen Algorithmus ausgeführt werden, der durch eine Steuereinheit (100) ausgeführt wird, die mit dem Antrieb der Aktuatoren (20) verbunden ist und diesen steuerbar antreibt oder einstellt.

3. Verfahren nach Anspruch 1, wobei der Schritt zum Auswählen und Aufzeichnens das Aufzeichnen und Erstellen eines Standardprofils der Position des Aktuators (20) oder des Ventilstifts (40) als Funktion der Zeit für den ausgewählten der Angusskanäle (50, 50a) aufweist, und wobei der Schritt zum Einstellen das Aufzeichnen und Einstellen der Positionen oder der Antriebsgeschwindigkeiten der Aktuatoren (20) oder der Ventilstifte (40) aufweist, die den anderen Angusskanälen (50a) zugeordnet sind, so dass sie sich dem Standardprofil der Position als Funktion der Zeit annähern oder damit übereinstimmen.

4. Vorrichtung (10) zum Ausführen eines Spritzgießzyklus in einer Spritzgießvorrichtung, wobei die Vorrichtung aufweist:
einen Verteiler (80), der ein flüssiges Spritzgießmaterial (90) empfängt, wobei der Verteiler einen Zufuhrkanal (95) aufweist oder damit kommuniziert, der das flüssige Spritzgießmaterial unter einem Einspritzdruck zwei oder mehr Angusskanälen (50, 50a) zuführt, die jeweils zu einem zugeordneten Formenhohlraum (70) führen;
einen jedem der Angusskanäle (50, 50a) jeweils zugeordneten Aktuator (20),
wobei jeder Aktuator (20) antriebsmäßig mit einem Ventilstift (40) verbunden ist, der stromaufwärts und stromabwärts entlang eines Verfahrweges antreibbar ist, der eine ausgewählte Verfahrlänge hat, die sich zwischen einer geschlossenen Position des Angusskanals (50, 50a) und einer ausgewählten Position für einen maximalen Durchfluss erstreckt, bei der das flüssige Spritzgießmaterial (90) mit einer maximalen Durchflussrate durch den Angusskanal (50, 50a) in den Hohlraum (70) fließt;
**dadurch gekennzeichnet, dass**
der Ventilstift (40) antreibbar ist durch eine oder mehrere auswählbare Zwischenpositionen zwischen der ersten Position und der Position für einen maximalen Durchfluss;
jeder Aktuator (20) steuerbar antreibbar ist, um den verbundenen Ventilstift (40) im Verlauf eines Spritzgießzyklus an der ersten, an einer oder mehreren auswählbaren Zwischenpositionen oder an der Position für einen maximalen Durchfluss zu positionieren;
jeder Angusskanal (50, 50a) einen stromabwärtsseitigen Sensor (Sensor 1, Sensor 1a) aufweist, der einen ausgewählten Zustand des flüssigen Spritzgießmaterials (90) an einer Position (120, 120a) innerhalb jedes zugeordneten Formenhohlraum (70, 70a) erfasst, der stromabwärts (120, 120a) von jedem zugeordneten Angusskanal (50, 50a) angeordnet ist, wobei der stromabwärtsseitige Sensor (Sensor 1, Sensor 1a) ein Antwortsignal erzeugt, wenn er den ausgewählten Zustand des flüssigen Spritzgießmaterials erfasst hat, nachdem das flüssige Spritzgießmaterial zur stromabwärtsseitigen Position (120, 120a) des stromabwärtsseitigen Sensors (Sensor 1, Sensor 1a) geflossen ist;
eine Steuereinheit (100) vorgegebene Daten enthält, die als eine Standardzeitdauer für einen ausgewählten der Angusskanäle (50) die Zeitdauer darstellt, die zwischen der Bewegung des dem ausgewählten der Angusskanäle (50, 50a) zugeordneten Ventilstifts (40) aus der geschlossenen Position des Angusskanals (50, 50a) und der Zeit verstrichen ist, zu der der dem ausgewählten der Angusskanäle (50) zugeordnete stromabwärtsseitige Sensor (120) zuerst den ausgewählten Zustand des in den zugeordneten Formhohlraum (70) fließenden flüssigen Spritzgießmaterials erfasst;
die stromabwärtsseitigen Sensoren (Sensor 1a) jedes der Angusskanäle (50a), die von dem ausgewählten (50) der Angusskanäle (50, 50a) verschieden sind, den ausgewählten Zustand des flüssigen Spritzgießmaterials erfassen und Antwortsignale bezüglich der Leistungsfähigkeit jedes der durch die Vorrichtung ausgeführten nachfolgenden Spritzgießzyklen an die Steuereinheit übertragen,
die Steuereinheit (100) von jedem stromabwärtsseitigen Sensor (Sensor 1a), der den anderen Angusskanälen (50a) zugeordnet ist, die Antwortsignale bezüglich der Leistungsfähigkeit jedes durch die Vorrichtung (10) ausgeführten nachfolgenden Spritzgießzyklus empfängt;
die Steuereinheit (100) Anweisungen enthält, durch die die Standardzeitdauer mit der berechneten verstrichenen Zeitdauer verglichen wird, die jedem der anderen Angusskanäle (50a) zugeordnet ist;
die Steuereinheit (100) Anweisungen enthält, durch die die Geschwindigkeit oder die Position jedes der Aktuatoren (20) eingestellt wird, der jedem der anderen Angusskanäle zugeordnet ist, um die Ventilstifte (40), die jedem der anderen Angusskanäle (50a) zugeordnet sind, während eines oder mehrerer nachfolgender Spritzgießzyklen basierend auf den verglichenen Zeitdauern mit einer oder mehreren Geschwindigkeiten oder zu einer oder mehreren Positionen anzutreiben, so dass die Zeitdauer, die zwischen der Bewegung der Ventilstifte (40) aus der geschlossenen Position des Angusskanals (50, 50a) und der Zeit verstrichen ist, zu der die stromabwärtsseitigen Sensoren (120a), die den anderen Angusskanälen (50a) zugeordnet sind, den ausgewählten Zustand zuerst erfassen, sich der Standardzeitdauer annähert oder damit übereinstimmt.

5. Vorrichtung nach Anspruch 4, ferner mit Positionssensoren (130aa), die die Position des Aktuators (20) oder des Ventilstifts (40) erfassen, der jedem der Angusskanäle (50, 50a) zugeordnet ist, wobei die Steuereinheit (100) Daten enthält, die ein Standardprofil der Position des Aktuators (20) oder des Ventilstifts (40) als Funktion der Zeit während eines Spritzgießzyklus für den ausgewählten der Angusskanäle (50, 50a) darstellen, wobei die Steuereinheit (100) Anweisungen enthält, durch die die Position als Funktion der Zeit der Aktuatoren (20) oder der Ventilstifte (40) für jeden der Angusskanäle (50, 50a) während eines oder mehrerer nachfolgender Spritzgießzyklen mit dem Standardprofil verglichen werden und die Position oder die Geschwindigkeit der Aktuatoren (20) oder der Ventilstifte (40), die den anderen Angusskanälen (50a) zugeordnet sind, während des Verlaufs des einen oder der mehreren nachfolgenden Spritzgießzyklen anweist, so dass die Position als Funktion der Zeit der Aktuatoren (20) oder der Ventilstifte (40), die den anderen Angusskanälen (50a) zugeordnet sind, sich dem Standardprofil annähert oder diesem gleicht.

## Revendications

1. Procédé de réalisation d'un cycle de moulage par injection dans un dispositif de moulage par injection (10) constitué :
d'un collecteur (80) qui reçoit un matériau fluide d'injection (90), le collecteur (80) comportant, ou communiquant avec, un canal de distribution (95) qui délivre le matériau fluide d'injection à mouler sous une pression d'injection à deux portes ou plus (50, 50a) chacune d'elles conduisant à une cavité de moule associée (70),
d'un actionneur (20) associé à chaque porte respective (50, 50a),
chaque actionneur (20) étant interconnecté de manière à pouvoir être actionné avec une goupille de soupape (40) pouvant être entraînée en amont et en aval le long d'un trajet de parcours, ayant une longueur de course sélectionnée qui s'étend entre une position fermée de la porte (50, 50a) et une position d'écoulement maximal sélectionnée à laquelle le matériau fluide d'injection s'écoule à un débit maximal à travers la porte (50, 50a) dans la cavité (70) et
**caractérisé en ce que** :
la goupille de soupape (40) peut être entraînée vers une ou plusieurs positions intermédiaires sélectionnables entre la première position et la position d'écoulement maximal,
chaque actionneur (20) pouvant être actionné de manière contrôlable pour positionner la goupille de soupape interconnectée (40) à la première position, à l'une des une ou plusieurs positions intermédiaires sélectionnables et à la position d'écoulement maximal durant un cycle d'injection,
un capteur aval (capteur 1, capteur 1a) qui détecte une condition physique sélectionnée du matériau fluide d'injection (90) à une position (120, 120a) à l'intérieur d'une cavité de moule (70) qui est en aval d'une porte associée (50, 50a), le capteur aval (capteur 1, capteur 1a) générant un signal correspondant aux valeurs détectées,
le procédé comprenant les étapes consistant à :
sélectionner et enregistrer à titre de standard pour une porte sélectionnée parmi les portes (50), le laps de temps qui s'est écoulé entre le déplacement de la goupille de soupape (40) associée à la porte sélectionnée parmi les portes (50, 50a) pour quitter la position fermée de la porte (50, 50a) et l'instant auquel le capteur aval (capteur 1) détecte pour la première fois la condition sélectionnée du matériau fluide d'injection s'écoulant dans la cavité de moule associée (70),
réaliser un cycle d'injection ultérieur et pour chacune des autres portes (50a) et détecter la condition physique sélectionnée du matériau fluide d'injection (90) à la position aval (120a) avec le capteur aval (capteur 1a) associé à chacune des autres portes (50a), et,
enregistrer le laps de temps qui s'est écoulé entre le déplacement de la goupille de soupape (40) associée à chacune des autres portes (50a) pour quitter la position fermée de la porte (50, 50a) et l'instant auquel le capteur aval (capteur 1a) détecte pour la première fois la condition sélectionnée du matériau fluide d'injection (90) s'écoulant dans les cavités associées (70a) de chacune des autres portes (50a),
comparer les laps de temps écoulés enregistrés associés à chacune des autres portes (50a) au laps de temps écoulé standard qui est associé à la porte sélectionnée parmi les portes (50),
ajuster la position ou la vitesse des actionneurs (20) ou des goupilles de soupape (40) associé(e)s à chacune des autres portes (50a) durant d'autres cycles d'injection ultérieurs de telle sorte que le laps de temps qui s'est écoulé entre le déplacement des goupilles de soupape (40) associées à chacune des autres portes (50a) pour quitter la position fermée de leur porte (50, 50a) et l'instant auquel le capteur aval (capteur 1a) détecte pour la première fois la condition sélectionnée du matériau fluide d'injection est proche ou correspond au laps de temps standard sélectionné.

2. Procédé selon la revendication 1, dans lequel les étapes de réalisation et d'ajustement sont effectuées automatiquement par un algorithme exécuté par une unité de commande (100) interconnectée aux actionneurs (20) pour les actionner ou ajuster de manière contrôlable leur actionnement.

3. Procédé selon la revendication 1, dans lequel l'étape de sélection et d'enregistrement comprend le fait d'enregistrer et d'établir un profil standard de position de l'actionneur (20) ou de la goupille de soupape (40) en fonction du temps pour la porte sélectionnée parmi les portes (50, 50a) et l'étape d'ajustement comprend le fait d'enregistrer et d'ajuster la position ou la vitesse d'actionnement des actionneurs (20) ou des goupilles de soupape (40) associé(e)s aux autres portes (50a) pour être proche ou correspondre au profil standard de position en fonction du temps.

4. Dispositif (10) destiné à réaliser un cycle de moulage par injection dans un dispositif de moulage par injection, le dispositif comprenant :
un collecteur (80) qui reçoit un matériau fluide d'injection (90), le collecteur (80) comportant, ou communiquant avec, un canal de distribution (95) qui délivre le matériau fluide d'injection à mouler sous une pression d'injection à deux portes ou plus (50, 50a) chacune d'elles conduisant à une cavité de moule associée (70),
un actionneur (20) associé à chaque porte respective (50, 50a),
chaque actionneur (20) étant interconnecté de manière à pouvoir être actionné avec une goupille de soupape (40) pouvant être entraînée en amont et en aval le long d'un trajet de parcours, ayant une longueur de course sélectionnée qui s'étend entre une position fermée de la porte (50, 50a) et une position d'écoulement maximal sélectionnée à laquelle le matériau fluide d'injection (90) s'écoule à un débit maximal à travers la porte (50, 50a) dans la cavité (70, 70a) et
**caractérisé en ce que** :
la goupille de soupape (40) peut être entraînée vers une ou plusieurs positions intermédiaires sélectionnables entre la première position et la position d'écoulement maximal,
chaque actionneur (20) pouvant être actionné de manière contrôlable pour positionner la goupille de soupape interconnectée (40) à la première position, à l'une des une ou plusieurs positions intermédiaires sélectionnables et à la position d'écoulement maximal durant un cycle d'injection,
chaque porte (50, 50a) présentant un capteur aval (capteur 1, capteur 1a) qui détecte une condition sélectionnée du matériau fluide d'injection (90) à une position à l'intérieur de chaque cavité de moule associée (70, 70a) qui est en aval (120, 120a) de chaque porte associée (50, 50a), le capteur aval (capteur 1, capteur 1a) générant un signal de réponse lors de la détection de la condition sélectionnée du matériau fluide d'injection lorsque le matériau fluide d'injection s'est écoulé vers la position aval (120, 120a) du capteur aval (capteur 1, capteur 1a),
une unité de commande (100) contenant des données prédéterminées représentant à titre de standard pour une porte sélectionnée parmi les portes (50), le laps de temps qui s'est écoulé entre le déplacement de la goupille de soupape (40) associée à la porte sélectionnée parmi les portes (50, 50a) pour quitter la position fermée de la porte (50, 50a) et l'instant auquel le capteur aval (120) associé à la porte sélectionnée parmi les portes (50) détecte pour la première fois la condition sélectionnée du matériau fluide d'injection s'écoulant dans la cavité de moule associée (70),
les capteurs aval (capteur 1a) de chacune des portes (50a) autres que la porte sélectionnée (50) parmi les portes (50, 50a) détectant la condition sélectionnée du matériau fluide d'injection et envoyant des signaux de réponse à l'unité de commande sur les performances de chaque cycle d'injection successif réalisé par le dispositif,
l'unité de commande (100) recevant les signaux de réponse de chaque capteur aval (capteur 1a) associé aux autres portes (50a) sur les performances de chaque cycle d'injection successif réalisé par le dispositif (10),
l'unité de commande (100) incluant des instructions, qui comparent le laps de temps écoulé standard au laps de temps écoulé calculé associé à chacune des autres portes (50a),
l'unité de commande (100) incluant des instructions, qui ajustent la vitesse ou la position de chacun des actionneurs (20) associés à chacune des autres portes (50a) pour entraîner les goupilles de soupape (40) associées à chacune des autres portes (50a) selon une ou plusieurs vitesses ou vers une ou plusieurs positions durant un ou plusieurs cycles d'injection successifs, sur la base des laps de temps comparés de telle sorte que le laps de temps qui s'est écoulé entre le déplacement des goupilles de soupape (40) pour quitter la position fermée de la porte (50, 50a) et l'instant auquel les capteurs aval (120a) associés aux autres portes (50a) détectent pour la première fois que la condition sélectionnée est proche ou correspond au laps de temps écoulé standard.

5. Dispositif selon la revendication 4, comprenant en outre des capteurs de position (130aa) qui détectent la position de l'actionneur (20) ou de la goupille de soupape (40) associé(e) à chacune des portes (50, 50a), l'unité de commande (100) incluant des données représentant un profil standard de position de l'actionneur (20) ou de la goupille de soupape (40) en fonction du temps durant un cycle d'injection pour la porte sélectionnée parmi les portes (50, 50a), l'unité de commande (100) incluant des instructions qui comparent la position en fonction du temps des actionneurs (20) ou des goupilles de soupape (40) pour chacune des portes (50, 50a) durant un ou plusieurs cycles d'injection successifs au profil standard et dictent la position ou la vitesse des actionneurs (20) ou des goupilles de soupape (40) associé(e)s aux autres portes (50a) durant les un ou plusieurs cycles d'injection successifs de telle sorte que la position en fonction du temps des actionneurs (20) ou des goupilles de soupape (40) associé(e)s aux autres portes (50a) est proche ou correspond au profil standard.
